# EUROPÄISCHE PATENTSCHRIFT

(11) **EP 1 044 152 B1**
(45) Veröffentlichungstag und Bekanntmachung des Hinweises auf die Patenterteilung: **19.02.2003**
(21) Anmeldenummer: 98965110.4
(22) Anmeldetag: 11.12.1998
(51) Int. Cl.: B65H 5/06, H04N 1/00, G07D 9/00

(54) **LESE- UND TRANSPORTVORRICHTUNG FÜR EINZELBELEGE**
READING AND CONVEYOR DEVICE FOR INDIVIDUAL DOCUMENTS
DISPOSITIF DE LECTURE ET DE TRANSPORT POUR DOCUMENTS INDIVIDUELS

(30) Priorität: 29.12.1997 DE 19758011
(43) Veröffentlichungstag der Anmeldung: 18.10.2000
(73) Patentinhaber: CGK Computer Gesellschaft Konstanz mbH, 78467 Konstanz (DE)
(72) Erfinder: ZINK, Thomas, D-78467 Konstanz (DE); KEARNEY, Peter, D-78224 Singen (DE)
(74) Vertreter: Schaumburg, Thoenes & Thurn
(86) Internationale Anmeldenummer: DE9803646
(87) Internationale Veröffentlichungsnummer: WO99033728

(56) Entgegenhaltungen:
- US-A- 3 737 575
- US-A- 5 124 800
- US-A- 5 564 686

## Beschreibung

Die Erfindung betrifft eine Lese- und Transportvorrichtung für Einzelbelege nach den Merkmalen des Oberbegriffs des Anspruchs 1.

Lese- und Transporteinrichtungen für Einzelbelege lassen sich grundsätzlich in zwei Gruppen einteilen. Während bei der einen Gruppe der Beleg in einer bidirektionalen Bewegung von einer Eingabestation zur Lesestation und wieder zurück zur Eingabestation, nunmehr Ausgabestation, bewegt wird, findet bei der zweiten Gruppe eine unidirektionale Bewegung von der Eingabestation über die Lesestation zur örtlich von der Eingabestation getrennten Ausgabestation statt. In beiden Fällen ist der Transportmechanismus relativ aufwendig. Hinzu kommt, daß ein eingegebener Beleg im Störfall nur mit Mühe aus der generell schwer zugänglichen Vorrichtung entnommen werden kann.

Aus der US-A-5,564,686 ist eine Lese- und Transportvorrichtung bekannt, die zwei Betriebsarten vorsieht. In der ersten Betriebsart werden zu lesende Blätter in einem face-down Zustand einer Umlenkwalze zugeführt und gelesen. In einer zweiten Betriebsart werden die zu lesenden Blätter in einem faceup Zustand über die Umlenkwalze derselben Lesestation zugeführt. In dieser zweiten Betriebsart beträgt der Umschlingungswinkel > 180°. Längs dem Umfang der Umlenkwalze sind mehrere Gegendruckwalzen sowie ein Separatorbauelement angeordnet.

Der vorliegenden Erfindung liegt nun die Aufgabe zugrunde, eine Vorrichtung der eingangs genannten Art in Aufbau und Funktion so zu gestalten, dass sie mit dem Ziel kurzer Beleglaufstrecken einen entsprechend geringen Materialaufwand erfordert und insbesondere aus Wartungsgründen eine einfache Zugänglichkeit ermöglicht.

Die Lösung dieser Aufgabe ergibt sich erfindungsgemäß durch die Merkmale des Anspruchs 1. Vorteilhafte Weiterbildungen der Erfindung sind in Unteransprüchen angegeben.

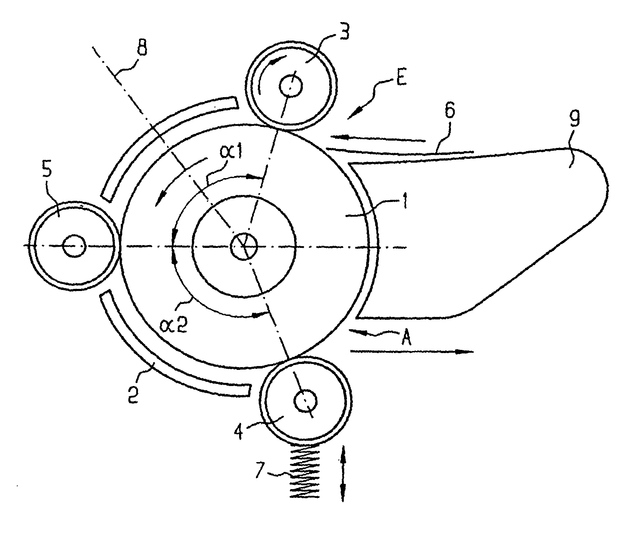

Im Folgenden wird ein Ausführungsbeispiel der Erfindung anhand der Zeichnung näher erläutert.

Die Figur zeigt den prinzipiellen Aufbau einer Lese- und Transportvorrichtung für Einzelbelege in einer schematischen Darstellung. Die Vorrichtung besteht im Einzelnen aus einer Umlenkwalze 1, einer diese Umlenkwalze teilweise umschlingenden kreisbogenförmigen Aussenschale 2, einer der Belegeingabestation E zugeordneten Antriebswalze 3, einer der Belegausgabestation A zugeordneten Andruckwalze 4 und einer zwischen Belegeingabe- und Belegausgabestation in der Aussenschale 2 eingebetteten Gegenrolle 5.

Die auf der Umlenkwalze 1 anliegende Antriebswalze 3 wird durch einen der Belegeingabestation zugeführten Einzelbeleg 6, beispielsweise lichtschrankengesteuert, mittels eines in der Figur nicht dargestellten Motorantriebs im Uhrzeigersinn angetrieben. Der zwischen Antriebswalze 3 und der gegen den Uhrzeigersinn mitlaufenden Umlenkwalze 1 eingezogene Einzelbeleg 6, wird nun entlang der aus Umlenkwalze 1 und Aussenschale 2 gebildeten Belegtransportbahn über die Gegenrolle 5 bis zur Belegausgabestation A transportiert, wo er entweder von Hand entnommen,. oder in ein Ablagefach gelegt werden kann. Antriebswalze 3 und Andruckwalze 4 sind in einem Umschlingungswinkel α1+α2>180° an der Umlenkwalze 1 angeordnet, so dass die Umlenkwalze 1 innerhalb dieses Umschlingungswinkels α1+α2, sich dabei in einer Art Dreipunktlagerung zusätzlich an der etwa beim halben Umschlingungswinkel α1 angeordneten Gegenrolle 5 abstützend, sicher gehalten und geführt ist. Um bei Bedarf, beispielsweise in einem Störfall oder zu Wartungszwecken, die Umlenkrolle 1 aus der Belegtransportbahn entnehmen zu können, ist die Andruckwalze 4 derart federnd gelagert, dass sie gegen die Kraft einer Andruckfeder 7 so weit ausgelenkt werden kann, dass die Umlenkwalze 1 zwischen Antriebswalze 3 und Andruckwalze 4 herausgezogen werden kann. Ebenso leicht kann die Umlenkwalze 1 anschließend wieder zwischen Antriebswalze 3 und der federnd nachgebenden Andruckwalze 4 in ihre Betriebsstellung zurückgeschoben werden.

Eine für die optische Abtastung der Einzelbelege vorgesehene Beleglesestation - in der Figur durch einen strichpunktierten Lesestrahl 8 angedeutet - ist vorzugsweise im Bereich zwischen der Antriebswalze 3 und der Gegenrolle 5 angeordnet. Die Aussenschale 2 der Belegtransportbahn weist deshalb im Bereich dieser Lesestation eine schlitzartige Aussparung zur Aufnahme eines der Lesestation zugeordneten Zeilensensors auf.

Im Raum zwischen der Belegeingabestation E und der darunter angeordneten Belegausgabestation A ist ein einerseits die offene Seite der Umlenkwalze 1 abdeckender und andererseits mit seiner ebenen Deckfläche als Belegeingabetisch dienender Ansatz 9 vorgesehen. Dieser Ansatz 9 ist lösbar befestigt und kann bei Bedarf einfach an- und abmontiert werden.

## Patentansprüche

1. Lese- und Transportvorrichtung für Einzelbelege, bestehend aus einer Belegeingabestation (E), einer durch eine Umlenkwalze (1) und eine diese Umlenkwalze (1) teilweise umschlingenden Außenschale (2) gebildeten Transportbahn, einer im Umschlingungsbereich vorgesehene Lesestation (8) und einer Belegausgabestation (A), wobei die am Eingang der Belegtransportbahn (1, 2) vorgesehene Belegeingabestation (E) aus einer auf der Umlenkwalze (1) aufliegenden Antriebswalze (3) besteht, die am anderen Ende der Belegtransportbahn vorgesehene Belegausgabestation (A) aus einer an der Umlenkwalze anliegenden Andruckwalze (4) besteht, die Antriebswalze (3) der Belegeingabestation und die Andruckwalze (4) der Belegausgabestation in einem Umschlingungswinkel > 180° angeordnet sind, die Andruckwalze (4) der Belegausgabestation mittels einer mit ihr mechanisch gekoppelten Andruckfeder (6) federnd gelagert ist, und wobei in der Außenschale (2) der Belegtransportbahn zwischen Belegeingabe- und Belegausgabestation eine Gegenrolle (5) eingebettet ist.

2. Lese- und Transportvorrichtung nach Anspruch 1, **dadurch gekennzeichnet, daß** in der die Umlenkwalze (1) teilweise umschlingenden Außenschale (2) eine schlitzartige Aussparung zur Aufnahme eines der Lesestation zugeordneten Zeilensensors vorgesehen ist.

## Claims

1. Reading and conveyor device for single documents, comprising a document input station (E), a transport track formed by a deflection roller (1) and an outer shell (2) partially encompassing said deflection roller (1), a reading station (8) provided in the contact area as well as a document output station (A), the document input station (E) provided at the input of the document transport track (1, 2) consisting of a drive roller (3) resting on the deflection roller (1), the document output station (A) provided at the other end of the document transport track consisting of a pressure roller (4) resting on the deflection roller, the drive roller (3) of the document input station and the pressure roller (4) of the document output station being arranged in an angle of contact of > 180°, the pressure roller (4) of the document output station being flexibly mounted by means of a pressure spring (6) which is mechanically coupled to the pressure roller, and a counter roller (5) being embedded in the outer shell (2) of the document transport track between the document input station and the document output station.

2. Reading and conveyor device according to claim 1, **characterized in that** in the outer shell (2) partially encompassing the deflection roller (1) a slot-like recess for receiving a line sensor which is assigned to the reading station is provided.

## Revendications

1. Dispositif de lecture et de transport pour documents individuels, constitué par une station d'entrée de documents (E), un chemin de transport formé par une coque extérieure (2) enveloppant partiellement un rouleau de déviation (1), une station de lecture (8) prévue dans la région d'enveloppement et une station de sortie de documents (A), dans lequel la station d'entrée de documents (E) prévue à l'entrée du chemin de transport de documents (1,2) comprend un rouleau d'entraînement (3) portant sur le rouleau de déviation (1), dans lequel la station de sortie de documents (A) prévue à l'autre extrémité du chemin de transport de documents comprend un rouleau presseur (4) portant sur le rouleau de déviation, dans lequel le rouleau presseur (4) de la station de sortie de documents sont agencés suivant un angle d'enroulement supérieur à 180°, dans lequel le rouleau presseur (4) de la station de sortie de documents est monté élastiquement au moyen d'un ressort de compression (6) couplé mécaniquement audit rouleau presseur, et dans lequel un rouleau antagoniste (5) est incorporé dans la coque extérieure (2) du chemin de transport de documents entre la station d'entrée de documents et la station de sortie de documents.

2. Dispositif de lecture et de transport selon la revendication 1, **caractérisé en ce qu'**un évidement en forme de fente destiné à recevoir un capteur de lignes associé à la station de lecture est ménagé dans la coque extérieure (2) enveloppant partiellement le rouleau de déviation (1).
